# EUROPEAN PATENT APPLICATION

(11) **EP 1 395 062 A1**
(43) Date of publication of application: **03.03.2004**
(21) Application number: 02292160.5
(22) Date of filing: 02.09.2002
(51) Int. Cl.: H04N 9/04

(54) **Color image pickup device**

(71) Applicant: Thomson Licensing S.A., 92648 Boulogne Cedex (FR)
(72) Inventor: Damstra, Nicolaas Johannes, 3315 DL Dordrecht (NL)
(74) Representative: Bonnans, Arnaud

(57) **Abstract**

An electronic camera comprising an objective to project an image onto a beam splitter separating the incident light into three monochromatic light beams of red, green and blue color and guiding each monochromatic light beam towards an individual optical sensor. All sensors have a light sensitive surface being identically structured into a plurality of pixels. Each optical sensor provides a color information signal of one of the primary colors red, green and blue, which are processed in a video processing stage to generate and output a video signal representing the image captured by the objective of the camera. A multiplexer receives the three primary color signals provided by the sensors for a particular pixel in parallel. According to the invention the multiplexer is arranged to select a single one of the primary color information signals for each pixel and to output the selected primary color information signal for all pixels of the light sensitive sensor surface in a sequential order for processing in the video processing unit.

## Description

The invention is related to a camera, and in particular to a professional camera.

The structure of most professional cameras is similar. An image is captured by an objective and imaged onto a beam splitter. The beam splitter separates the incident light into the three primary colors red, green and blue. The monochromatic light beams are each projected onto a separate optical sensor, e.g. a CCD sensor. The optical sensor transforms the initial light signal into electrical signals, which are processed to generate red, green and blue chroma signals, respectively.

The chroma signals also known as RGB signal are processed in a video processing unit. The optics and the highly performing CCD sensors are very expensive components of the camera. Furthermore, the video processing is complex and calls for dedicated chip sets which are accordingly expensive too. These costs among others result in a high selling price for professional cameras, which limits the market to rather low quantities compared to consumer cameras.

One possible way to achieve cost savings on the manufacturer side is to increase the integration of the electronic video processing circuitry inside the camera. But a higher level of integration incurs significant development costs for the ICs, which are very complex already today. The investment in development can pay back for the manufacturer and can result in cost savings for the customer only if high quantities of sales are anticipated. However, as mentioned above it is difficult to sell professional cameras in large quantities because the market is small.

Consumer cameras apply only a single CCD sensor as imager for having a pixel based color filtering together with a high level of integration for the electronic video processing. Consumer cameras are therefore much cheaper than a conventional professional camera. Evidently the resolution of consumer cameras is much lower compared to a camera having three imagers and not appropriate for professional application by broadcasters.

Hence, there remains a need on the side of the broadcasters for a more cost efficient professional camera maintaining a picture quality that is satisfactory for broadcasting purposes.

The invention suggests an electronic camera comprising an objective to project an image onto a beam splitter separating the incident light into three monochromatic light beams of red, green and blue color and guiding each monochromatic light beam towards an individual optical sensor. All sensors have a light sensitive surface being identically structured into a plurality of pixels. Each optical sensor provides a color information signal of one of the primary colors red, green and blue, which are processed in a video processing stage to generate and output a video signal representing the image captured by the objective of the camera. A multiplexer receives the three primary color signals provided by the sensors for a particular pixel in parallel. According to the invention the multiplexer is arranged to select a single one of the primary color information signals for each pixel and to output the selected primary color information signal for all pixels of the light sensitive sensor surface in a sequential order for processing in the video processing unit.

The inventive camera has the advantage that IC chip sets can be used for the video processing which are produced in mass production for consumer cameras. At the same time the picture quality of the inventive camera satisfies professional standards for the picture quality. This concept allows making significant savings on development and production costs compared to conventional professional cameras utilizing dedicated chip sets for the video processing.

In an advantageous embodiment of the invention the video processing unit comprises means for interpolating the primary color information signals in order to attribute to each pixel color information signals of the two primary colors that have not been selected by the multiplexer. This modification makes the sequential RGB signal perfectly compatible with commercial consumer camera video processing chip sets.

In one embodiment of the invention the multiplexer outputs the sequential color information signal as a sequential RGB signal by omitting pixels/lines of each pixel color information signal, which are not needed for the sequential RGB signal.

In a more advantageous embodiment of the invention the video processing unit comprises means for filtering to down sample each color information signal before the multiplexer. This leads to a better performance after the interpolation that is normally used in the consumer chips used together with a single sensor camera.

The multiplexer can be arranged either in the analogue or digital signal domain.

The optical sensors can either be CCD sensors or CMOS sensors.

Finally the electronic camera can be provided with means for controlling the optical sensors and the video processing unit to enable the camera to provide video signals according to different formats. In this way the camera can be used in a very flexible way.

In the drawing an exemplary embodiment of the present invention is shown. In the drawing similar or corresponding elements are denoted with the same reference numbers.
- Fig. 1: a schematic block diagram of a conventional professional camera,
- Fig. 2a: a detailed and schematic illustration of a conventional CCD sensor utilized in consumer cameras shown in a sectional view,
- Fig. 2b: a schematic top view of the CCD sensor shown in Fig. 2, and
- Fig. 3: a schematic block of a professional camera according to the invention.

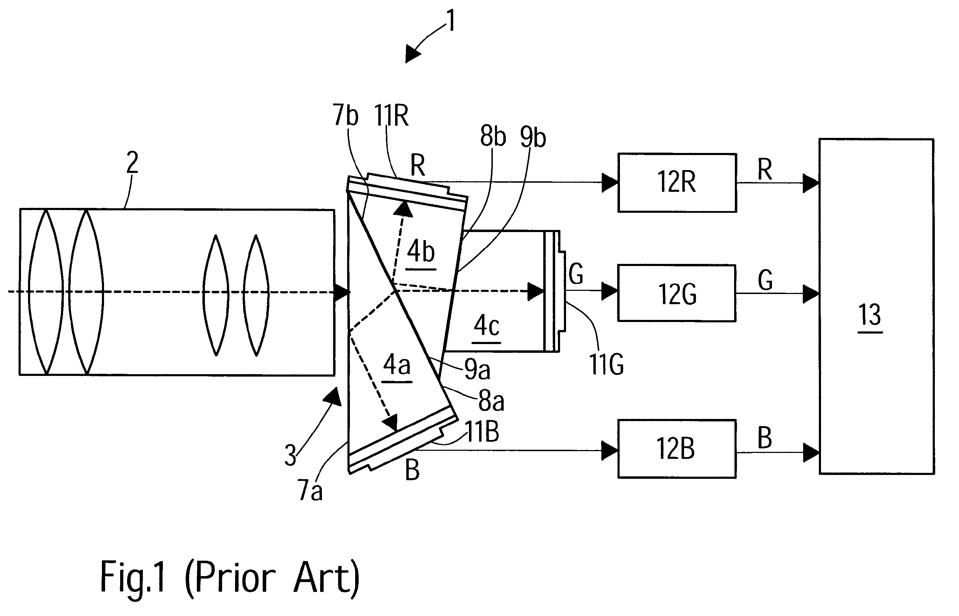

In Fig. 1 a schematic block diagram of a conventional professional camera is shown, which is referenced as a whole with the reference number 1.

A camera objective 2 images a scene onto a beam splitter 3. The beam splitter 3 comprises three prisms 4a, 4b, 4c, which are coated with dichroitic layers for color filtering purposes. The incident light beam illustrated by an arrow 6 enters into the prism 4a through front surface 7a and impinges onto an opposing surface 8a. The surface 8a is coated with a dichroitic layer 9a reflecting blue and transmitting red and green light. The blue portion of the light is guided by total reflection at the front surface 7a to a CCD sensor 11B.

The transmitted red and green portions of the light enter into the prism 4b through a front surface 7b and impinge onto an opposing surface 8b. The surface 8b is coated with a dichroitic layer 9b reflecting red and transmitting green light. The red portion of the light is guided by total reflection at the front surface 7b to a CCD sensor 11R where as the green light portion propagates through prism 4c to a CCD sensor 11G.

The CCD sensors 11R, 11B, 11G are of the dynamic pixel management (DPM) type, which is preferred due to its wide dynamic range and flexible application. The DPM CCDs are capable to provide multiformat video signals (4:3, 16:9) without sacrificing the horizontal resolution or changing the horizontal viewing angle.

Each CCD sensor 11R, 11G, 11B transforms the incident monochromatic light signal into an electrical signal, each of which is supplied to a separate preprocessing unit 12R, 12G, 12B. The read-out of the CCD sensors is carried out according to a method, which is called "Correlated Double Sampling". Details of the circuit are disclosed e.g. in US 5,554,944 and US 2002/0044207 A1. The output signal of the preprocessing units 12R, 12G, 12B are standard digital red, green and blue chroma signals forming the input signals for a video processing unit 13. The video processing unit 13 provides a video signal according to a desired standard and format. A control unit not shown in Fig. 1 sets the required operating conditions for the video processing unit and the CCD sensors 11R, 11G, 11B to achieve the desired video signal output.

As mentioned above consumer cameras use only a single CCD sensor for all three primary colors. Therefore, such cameras have no beam splitter and the image is projected by the objective onto the CCD sensor arranged on the optical axis of the objective.

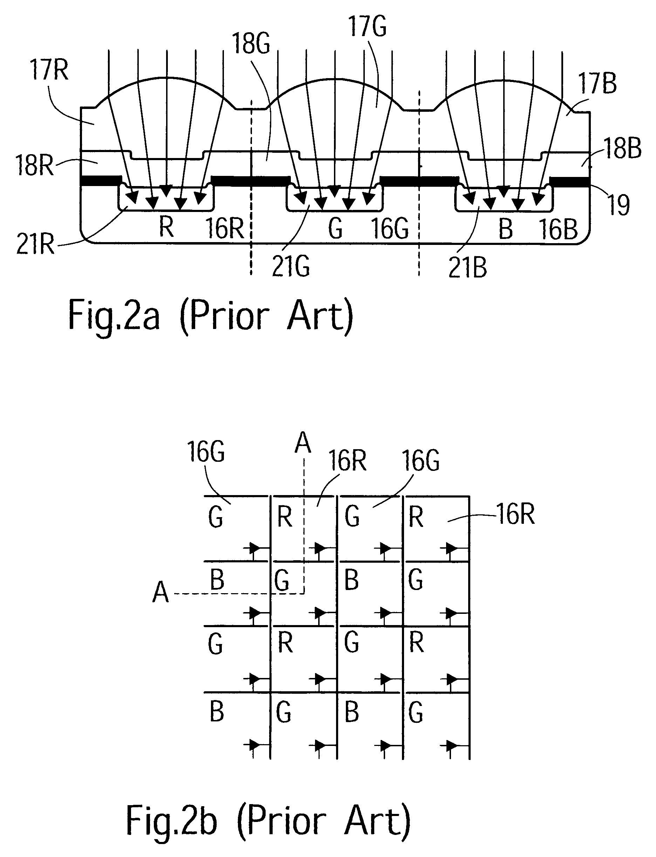

Figs. 2a and 2b illustrate in a schematic way the type of sensor used in consumer cameras. Fig. 2a shows the structure of the pixels 16R, 16G, 16B of the sensor. The incident light is focused by micro lenses 17R, 17G, 17B onto the pixels. The discrimination between the primary colors red, green and blue is achieved by color filter layers 18R, 18G, 18B. A masking layer 19 provided with windows for the light sensitive area 21R, 21G, 21B where the photodiode of each pixel is physically located, prevents cross talk between the pixels.

Fig. 2b visualizes in a top view the arrangement of pixels for the different colors. As can be easily seen in the picture it is a repeating 2x2 pattern. The dashed line A-A indicates the location of the sectional view shown in Fig. 2a.

The read-out of the CCD lines provides a sequence of picture data as follows:
For the odd numbered lines ... G R G R ...
For the even numbered lines ... B G B G ...
This output is called sequential RGB or sRGB. The sequential RGB signal is processed according to the so-called "Bayer" algorithm as described in US 3,971,065. It is noted that for this type of video processing IC chip sets are commercially available at very competitive prices due to the large quantities produced for consumer applications. The commercial available video processing circuits for sRGB signals perform an interpolation process to recalculate for each monochromatic pixel the color information of the other two colors missing in the pixel at the first instance.

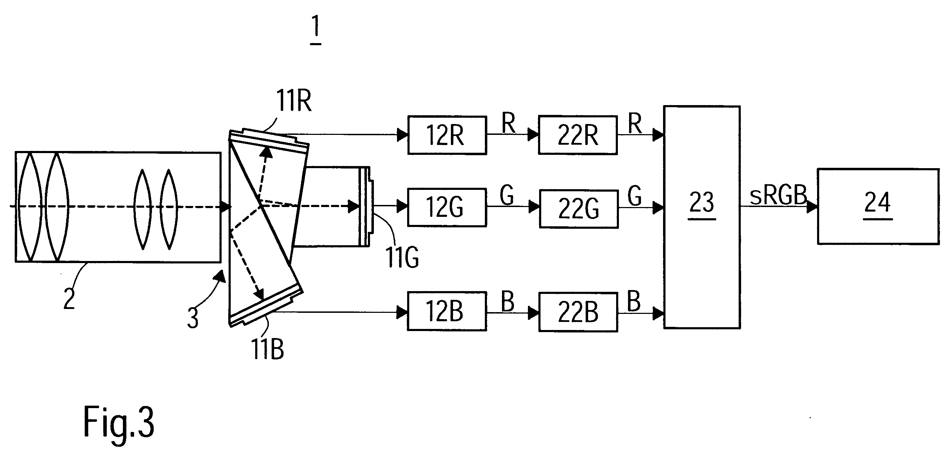

Fig. 3 shows a schematic block diagram of the inventive camera. The camera shown in Fig. 3 is identical to the conventional camera described in connection with Fig. 1 to the point where the preprocessing units output R, G and B signals, respectively. As can be taken from Fig. 2b the single CCD sensor has only half the resolution in horizontal direction for all three primary colors and half the resolution in vertical direction for red and blue, both compared to a monochromatic CCD sensor. The output of each preprocessing stage 12R, 12G, 12B is connected to an input of an electronic filter 22R, 22G, 22B the outputs of which are connected to a multiplexer 23 generating a sequential RGB signal having an identical structure of the sRGB signal generated by the single CCD sensor of a consumer camera. The electronic filters 22R, 22G, 22B are down sampling each color information signal before the multiplexer 23. In this way all color information received from the CCD sensors is kept inside the sRGB generated by the multiplexer. The sRGB signal forms the input for a conventional video processing unit 24 adapted to the sRGB signal.

As multiplexer a standard IC can be used. However, a programmable IC is preferred to provide flexibility and to optimize the resulting signal by adapting the electronic filtering.

The electronic filtering of the input signals of the multiplexer 23 results in a better performance after the interpolation used standard in commercial video processing chips that are applied in single sensor cameras.

As a result the video signal generated by the video processing unit 24 is good enough for professional purposes.

Another advantage of the inventive camera is that all the flexibility of professional cameras with regard to different TV standards and formats provided by dynamic pixel management CCDs is conserved.

The present invention has been described only by way of example in connection with CCD sensors, it is also applicable to a camera that is equipped with CMOS sensors.

In an alternative embodiment the multiplexer 23 outputs a sequential complementary signal e.g. R-G/G/B-G or R-Y, Y, B-Y. However, the general concept of the invention remains the same.

In yet another embodiment the multiplexing of color signals RGB is performed in the analogue signal domain, i.e. between the CCD sensors 11R, 11G, 11B and a subsequent preprocessing stage, if the signal is analogue-to-digital converted already in the preprocessing stage. If the preprocessing stage does not include A/D converters the multiplexing takes place after the preprocessing but still in the analogue domain. In this case preprocessing encompasses only correlated sampling and gain adjustment of the CCD sensor output signals.

The person skilled in the art is familiar with commercially available ICs capable to perform the functions as described above. By way of example a few of them are named: LZ24BP by Sharp (CCD sensor), IR3Y48A1 by Sharp (CCD signal processing and digital interface IC), CXA1390AQ/AR by Sony (CCD camera signal processing), and CXA1391Q/R by Sony (signal processing in complementary color mosaic CCD sensors).

## Claims

1. Electronic camera (1) comprising an objective (2) to project an image onto a beam splitter (3) separating the incident light into three monochromatic light beams of red, green and blue color and guiding each monochromatic light beam towards an individual optical sensor (11R, 11G, 11B), all sensors having a light sensitive surface being identically structured into a plurality of pixels wherein each optical sensor provides a color information signal of one of the primary colors red, green and blue, which are processed in a video processing stage (13) to generate and output a video signal representing the image captured by the objective (2) of the camera,
**characterized by**
a multiplexer (23) receiving the three primary color signals provided by the sensors (11R, 11G, 11B) followed by their preprocessing units (12R, 12G, 12B) for a particular pixel in parallel, the multiplexer being arranged to select a single one of the primary color information signals for each pixel and to output the selected primary color information signal for all pixels of the light sensitive sensor surface in a sequential order for processing in the video processing unit.

2. Electronic camera according to claim 1, **characterized in that**, the video processing unit (13) comprises means for interpolating the primary color information signals in order to attribute to each pixel color information signals of the two primary colors that have not been selected by the multiplexer (23).

3. Electronic camera according to one of the preceding claims, **characterized in that**, the multiplexer (23) outputs a sequential RGB signal.

4. Electronic camera according to one of the preceding claims, **characterized in that**, the multiplexer (23) outputs a sequential complementary signal (R-G/G/B-G, R-Y/Y/B-Y).

5. Electronic camera according to one of the preceding claims, **characterized in that** the multiplexer (23) is arranged in the digital signal domain.

6. Electronic camera according to one of the preceding claims, **characterized in that** the multiplexer (23) is arranged in the analogue signal domain.

7. Electronic camera according to one of the preceding claims, **characterized in that**, the optical sensors are CCD or CMOS sensors (11R, 11G, 11B).

8. Electronic camera according to one of the preceding claims, **characterized by** means for controlling the optical sensors (11R, 11G, 11B) and the video processing unit (24) to enable the camera to provide video signals according to different formats (4:3, 16:9).

9. Electronic camera according to one of the preceding claims, **characterized by** a means for filtering (22R, 22G, 22B) each primary color information signal (R, G, B).
